# EUROPEAN PATENT SPECIFICATION

(11) **EP 1 851 985 B1**
(45) Date of publication and mention of the grant of the patent: **23.11.2011**
(21) Application number: 05715546.7
(22) Date of filing: 25.02.2005
(51) Int. Cl.: H04W 64/00

(54) **LOCATION CONTROL IN A MOBILE COMMUNICATIONS NETWORK**
POSITIONSSTEUERUNG IN EINEM MOBILKOMMUNIKATIONSNETZ
VERIFICATION D'EMPLACEMENT DANS UN RESEAU DE COMMUNICATIONS MOBILES

(43) Date of publication of application: 07.11.2007
(73) Proprietor: Telefonaktiebolaget L M Ericsson (publ), 164 83 Stockholm (SE)
(72) Inventor: NYLANDER, Tomas, S-139 34 Värmdö (SE); VIKBERG, Jari, S-153 38 Järna (SE); NISKA, Håkan, S-587 58 Linköping (SE)
(74) Representative: Sjöberg, Mats Hakan
(86) International application number: PCT/EP2005/002005
(87) International publication number: WO 2006/089567

(56) References cited:
- US-A- 6 002 936
- US-A1- 2002 019 698

## Description

### Field of invention

The invention is directed to mobile telecommunication networks and has particular relevance for GSM networks that are extended by access networks using other mobile technologies.

### Background art

In GSM networks information relating to the location of a mobile station is provided by location service entities disposed in or connected to the base station subsystems. These location service entities respond to a location request from the core network by estimating the location of the mobile station and return the result to the core network. In performing this estimation the location service entities can use various access network resources, including the base station, the mobile station and also dedicated resources to obtain the necessary information. The information may include the cell location, timing advance information, mobile assisted enhanced observed time difference, mobile based enhanced observed time difference and radio channel parameters for the mobile station.

This process provides reliable and accurate position information in a pure GSM system. However, when conventional cellular networks are extended using access networks that utilise an unlicensed-radio interface to communicate with mobile stations the same information is not available. For example, it is not possible to obain Timing Advanced information in such an access network. Consequently, the described process cannot be relied upon to locate a mobile station. An unlicensed radio access network and the mobile station for use with this access network is described in European patent application No. EP-A-1 207 708. The unlicensed mobile access (UMA) specifications also define an access network of this kind. For the purposes of this document, such access networks will be referred to as Generic Access Networks (GAN) in line with the 3rd Generation Partnership Project (3GPP) standards 3GPP Technical Specifications 43.318 (Stage-2) and 44.318 (Stage 3) for "Generic Access to A and Gb-interface".

These access networks are designed to be used together with the core elements of a standard public mobile network. The access network is constructed so that the core elements, such as the mobile switching centres MSC, of the public mobile core network views the unlicensed-radio access network as a conventional base station system BSS.

Access points in these access networks are connected to an access controller (Generic Access Controller - GAN) by a - preferably existing - broadband network, which may include the Internet. Consequently, access points are easily installed and moved so that a number of access points within the same access network may be located many kilometres apart, possibly in different states or countries. For this reason a single cell identifier in an unlicensed radio access network typically refers to many access points. Indeed in some proposals for an unlicensed radio access network all access points are allocated the same cell identifier regardless of their physical location in order to simplify configuration of the core network. This naturally complicates the positional tracking of a mobile station since the normal identification information used within a GSM access network cannot reveal the true physical location of a mobile station.

In the current system, the location service entities are responsible for selecting an appropriate location method to perform positioning. Available positioning support in the network is configured in advanced in the location service entities. This configuration defines the support that can be provided by individual nodes. The support provided by a BSC is quite different from that available from a generic access network controller (GANC), which complicates the configuration. If the node is a combined BSC/GANC there is no indication to the location entities of how the mobile station is connected to the network. In this case the location service entities may use a trial and error approach to select an appropriate positioning method, but this delays the positioning, possibly to an unacceptable extent in the case of emergency calls.

Another example can be found im document US-A-6002936 (ROEL-NG ET AL) 14 December 1999

### SUMMARY OF THE INVENTION

In the light of the above, it is an object of the present invention to provide a location process capable of reliably identifying the position of a mobile station whether the mobile station is connected to a GSM, unlicensed radio or another type of access network.

It is a further object of the invention to provide a location process for use in GSM networks that are extended by new access networks that is of low complexity, limits the configuration costs on the operator and minimises delays to the location procedure.

These objects are achieved in accordance with the present invention by a method of determining the location of a mobile station within a mobile telecommunication network including the steps of: receiving a location request from a network element; the location request including information indicative of at least one positioning method supported by the network element; selecting at least one of the positioning methods indicated in the location request and utilising the selected positioning method to determine the location of the mobile station; and returning information indicative of the mobile station location to said network element.

By providing the location service entities with information on the location methods to use, there is no need to configure the location service entities with this information in advance. Moreover, the process is flexible and can be tailored to the network element making the request and thus to the type of connection actually used by the mobile station. There is no need for the location entities to launch several location methods before retrieving sufficiently accurate information since the most suitable methods are communicated in advance.

In accordance with a preferred embodiment of the invention, the step of receiving a location request includes receiving data specific to the mobile station for use in at least one of the indicated positioning methods, and said step of utilising one of the positioning methods includes utilising the data in the positioning method.
This obviates the need for the location service entities to request this information from the relevant network element and still further reduces delays.

In accordance with a further aspect of the invention the above objects are achieved in a method of requesting the location of a mobile station performed in an access controller forming part of an access network providing a connection between a mobile station and a core network portion of a telecommunications network. The method includes the steps of: generating a location request including an information element indicating at least one positioning method supported by the access controller in the connection with the mobile station and preferably also including the relevant information for the positioning methods supported; sending this location request to a location centre; receiving a location request response from the location centre.

### BRIEF DESCRIPTION OF THE DRAWINGS

Further objects and advantages of the present invention will become apparent from the following description of the preferred embodiments that are given by way of example with reference to the accompanying drawings. In the figures:
- Fig. 1: schematically illustrates the functional architecture of the location service elements in a mobile communications network having both GSM and unlicensed radio access networks,
- Fig. 2: schematically depicts the signalling between the location centre, access network and mobile station following when processing a location request in accordance with a first embodiment of the invention, and
- Fig. 3: schematically depicts the signalling between the location centre, access network and mobile station following when processing a location request in accordance with a second embodiment of the invention

### DETAILED DESCRIPTION OF THE DRAWINGS

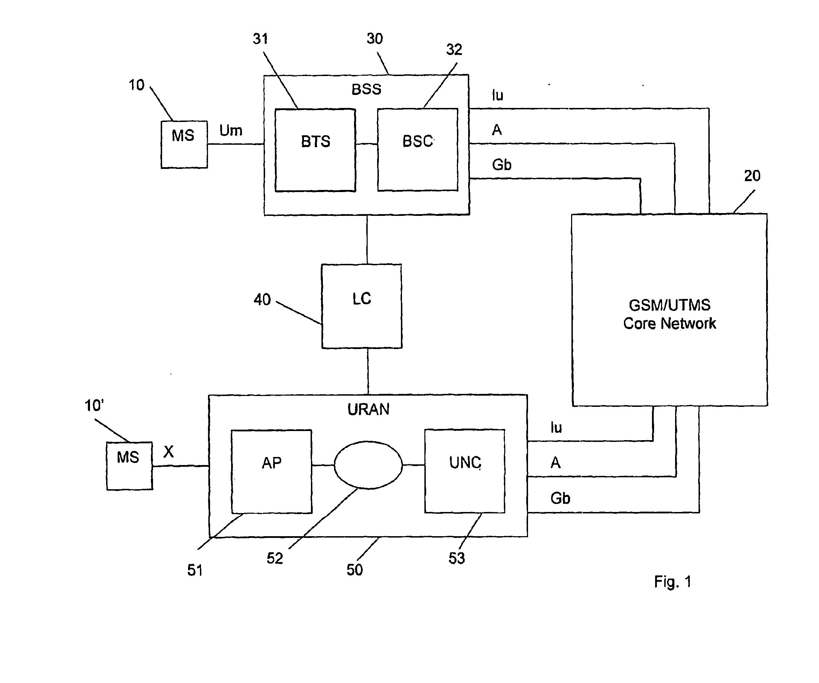

Fig. 1 illustrates schematically the location service elements present with a mobile communication network. The figure shows two mobile stations 10 and 10', each of which is connected to a core network portion 20 via an access network. The first mobile station 10 shown in the uppermost half top of Fig. 1 is connected via a wireless link Um to a GSM access network or base station subsystem BSS 30. The base station subsystem BSS 30 includes a base station controller BSC 32 and a number of base transceiver stations, of which one is illustrated 31. This base transceiver station 31 supports the wireless link Um to the mobile station 10. Each base station transceiver is connected to, and controlled by, the base station controller BSC 32. The access network 30 is in turn connected to the core network 20, which is either a GSM or UMTS core network, or alternatively supports both standards. The various interfaces between the access network 30 and core network support GSM telephony traffic over the A-interface, General Packet Radio Service (GPRS) traffic over the Gb-interface or UMTS telephony traffic and packet services over the lu-interface.

The second mobile station 10' located in the lower half of Fig. 1 is capable of supporting an unlicensed radio interface X with an unlicensed radio access network, possibly in addition to a conventional (licensed) mobile communications radio interface. The mobile station 10' communicates over the unlicensed radio link X with an access point 51 of an unlicensed radio access network 50. The components making up this unlicensed-radio access network 50 also enable the mobile station 10' to access the GSM/UMTS core network portion, and through this, other communication networks. By unlicensed-radio is meant any radio protocol that does not require the operator running the mobile network to have obtained a license from the appropriate regulatory body. In general, such unlicensed-radio technologies must be low power and thus of limited range compared to licensed mobile radio services. The radio interface may utilise any suitable unlicensed-radio protocol, for example a wireless LAN (W-LAN) protocol, Digital Enhanced Cordless Telecommunications (DECT) or Bluetooth.

Only one access point AP 51 is illustrated in Fig. 1, but it will be understood that many hundreds of these elements may be included in the unlicensed-radio access network 50. This element handles the radio link protocols with the mobile station MS 10' and contains radio transceivers that define a coverage area or cell in a similar manner to the operation of a conventional GSM base station transceiver BTS 101. All communication via the access points AP 51 is controlled by an access controller GANC 53, which communicates with the various nodes in the core network portion 20 via the standard A, Gb and/or lu interfaces. The joint function of the access point AP 51 and the access controller GANC 53 emulates the operation of the BSS 30 towards the core network 20. In other words, when viewed from the elements of the core network 20, the access network portion 50 constituted by the access points AP 51 and the access controller GANC 53 looks like a conventional access network portion 30.

The interface between the access point AP 51 and the access controller GANC 53 is provided by a packet-switched broadband network 52, which may be a fixed network. The access point 51 is intended to be a small device that a subscriber can purchase and install in a desired location such as the home or an office environment to obtain a fixed access to the mobile network. However, they could also be installed by operators in traffic hotspots. In order to reduce the installation costs on the part of the operator, the interface between the access point 51 and the access controller 53 preferably exploits a connection provided by an already existing network 52. Suitable networks might include those based on ADSL, Ethernet, LMDS, or the like. Home connections to such networks are increasingly available to subscribers while access points to such networks are becoming widespread in public and commercial buildings. Although not shown in Fig. 1, the access point AP 51 may be connected to a network terminal giving access to the network 52, while the access controller GANC 53 may be connected to an edge router ER of the network 52 that also links the network 52 to other networks such as intranets and the internet. The Internet protocol, IP, is used for communication over the network 52 to render the transport of data independent of the network type.

The access point AP 51 may serve as a dedicated access point to the unlicensed-radio access network. In this case the access point AP 51 is capable of communicating independently with the mobile station 10' over the unlicensed-radio interface X or with the access controller GANC 53 over the broadband network 52.

Alternatively, the access point AP 51 may serve as an essentially transparent access point when viewed both from the access controller 53 and the mobile station 10'. In other words, this access point AP 51 relays all information at the IP level and above between the mobile station 1 and the access controller GANC 53. It simply effects the conversion between the OSI reference model layers 1 and 2 unlicensed-radio and terrestrial access layer services. Accordingly, the mobile station 10' establishes a connection with the access controller GANC 53 without recognising the access point AP 51 as a node in the Layer 3 connection. Similarly the access controller GANC 53 could establish a connection with the mobile station 10' directly.

In each case each access point is allocated a unique identifier AP-ID. The form of the identifier depends on the unlicensed radio technology utilised and may also be operator specific. For example, when the Bluetooth radio protocol is used, the identifier may be a Bluetooth Device Address. Alternatively it can consist of different identifiers, such as the PAN Service name. Similarly for WLAN access points, the identifier may contain a MAC address, possibly in combination with the SSID. Depending on the type of access point AP 51, either the access point AP 51 or the mobile station 10' is allocated an IP address on the broadband packet switched network 52 and communication to and from the access controller GANC 53 uses the allocated IP address.

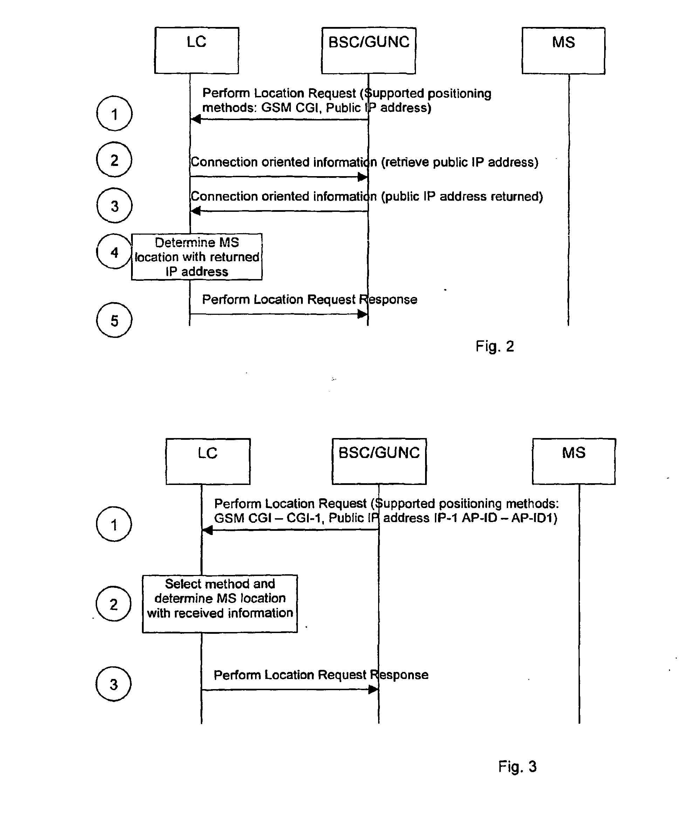

A processing element referred to here as a location centre 40 is connected to both the base station subsystem (the GSM access network) 30 and the unlicensed radio access network 50. This is a stand-alone element that is accessible by several access networks. The location centre 40 is a similar entity to the Serving Mobile Location Centre SMLC specified in the 3GPP GERAN (GSM EDGE Radio Access Network) system but has extended functions. Similarly the procedures and messages passed over the interface between the location centre 40 and the access network 30 include many of those passed over the Lb interface between a SMLC and BSS as defined in 3GPP TS 49.031 and 3GPP TS 48.071. Essentially, the location centre 40 responds to a request for the position of a mobile station, for example, relayed from the core network by an access network, by determining the mobile station location using one or more pre-configured positioning methods and responding with a location response. In accordance with the present invention, the access network does not simply relay or generate a request for location information, but instead includes additional information in this request indicating the positioning methods supported by the access network for this particular mobile station. This is described in more detail with reference to Figs. 2 and 3.

Fig. 2 shows the signalling between the location centre LC, access network controller and mobile station following a request from the core network or an internal location service client to provide location information for a specific mobile station. As shown, the access network controller may be a GSM base station controller BSC or an generic access network controller GANC; the procedure is the same in both cases. At step 1 an initial Perform Location Request message is sent from the access controller to the location centre. In accordance with the present invention, this message includes an information element that specifies which methods are supported by the access network and specifically, the methods that are supported for the actual connection to the mobile station. In the example illustrated in Fig. 2, the supported positioning methods include using the GSM cell global identifier CGI and the public IP address of the mobile station or the MAC address of the access point to which it is attached. E.g. the Time Advanced method is not possible to use. On receipt of this message the location centre LC selects one of the indicated methods and proceeds to determine the mobile station location. This is done by sending a request to the access controller for the public IP address of the mobile station at step 2 and receiving the public IP address from the access controller at step 3. With this IP address the location centre then determines the mobile station location at step 4. The location information is then returned to the access controller in step 5.

In addition to or instead of the GSM CGI or public IP address, the information communicated to the location centre LC for use in a location method may include one or more of the following:
1. Timing Advance
2. Mobile Assisted Enhanced Observed Time Difference (E-OTD)
3. Mobile Based Enhanced Observed Time Difference (E-OTD)
4. Global Positioning System (GPS)
5. Uplink Time Difference of Arrival (U-TDOA)
6. Public IP address (or Private AP address)
7. Access point identifier AP-ID (MAC address of Access Point)
8. WLAN SSID
9. Bluetooth PAN service name
10. GSM CGI (GSM cell covering the mobile station connected to GAN)

The above list is not exhaustive and may include other aids to locating the mobile station depending on the type of connection used by the mobile station.

It is noted that the first five items in the list would normally be used for a GSM connection and would thus be sent by a GSM BSC. The remaining information elements are used when the mobile is connected to an unlicensed radio access point and so would be communicated by a generic access network controller GANC. While location service control within the present 3GPP GERAN system uses the methods for a GSM connection as detailed above, the location service entity (SMLC) is configured with this information prior to any request. In accordance with the present invention, there is no need to configure the location centre with the available methods. All the information necessary is supplied with each location request. Furthermore, in a system with a combined BSC/GANC having a single connection to the location centre (LC) of the present invention, the LC can directly select a suitable positioning method to use for the individual mobile station.

Turning to Fig. 3, there is illustrated an alternative method in accordance with the present invention. Fig. 3 also shows the signalling between the location centre LC and access controller (BSC/GANC) following a location request from the core network, for example. At step 1, the access controller sends a Perform Location Request message and as in the method illustrated in Fig. 2 this message includes an information element identifying the location methods supported by the access network for the actual connection with the mobile station. However, in addition to the location method information, the message also contains the data relevant for each location method listed. In the illustrated example the message identifies the use of the GSM cell global identifier CGI and the public IP address as methods and also provides the GSM CGI and the public IP address for the mobile station connection. Accordingly at step 2, the location centre LC can proceed with determining the mobile station location using one or more of the communicated methods and the data for each method. At step 3, the location centre LC then returns the mobile station location to the access controller in a Perform Location Request Response message.

The above detailed description has referred only to GSM networks as a conventional public mobile network. It will be understood by those skilled in the art, however, that description applies for other conventional public mobile networks, such as UMTS or CDMA2000, in an analogous manner.

## Claims

1. A method of determining the location of a mobile station within a mobile telecommunication network including the steps of:
receiving at a location centre a location request from an access controller, said access controller forming part of an access network providing a connection between said mobile station and a core network portion of said mobile telecommunications network, said location request including an information element indicative of at least one positioning method supported by said access controller in the connection with said mobile station,
selecting at least one of the positioning methods indicated in said location request and utilising said selected positioning method to determine the location of the mobile station and returning information indicative of the mobile station location to said access controller.

2. A method as claimed in claim 1, wherein said step of receiving a location request includes receiving data specific to the mobile station for use in at least one of said indicated positioning methods, and said step of utilising one of the positioning methods includes utilising the data in said positioning method.

3. A method as claimed in claim 1, wherein said step of utilising one of the positioning methods includes requesting from an access controller data specific to the mobile station for use in said selected positioning method.

4. A method as claimed in any previous claim, wherein said positioning methods include the use of at least one of the following parameters:
Timing Advance, Mobile Assisted Enhanced Observed Time Difference (E-OTD), Mobile Based Enhanced Observed Time Difference (E-OTD), Global Positioning System (GPS), Uplink Time Difference of Arrival (U-TDOA), Cell Global Identifier CGI, Public IP address, Private IP address, Access point identifier AP-ID, WLAN SSID, Bluetooth PAN service name.

5. A method for requesting the location of a mobile station from an access controller (32; 53) forming part of an access network (30; 50) providing a connection between a mobile station (10; 10') and a core network portion (20) of a telecommunications network, said method including the steps of:
generating a location request including an information element indicating at least one positioning method supported by the access controller (32; 53) in the connection with the mobile station (10; 10');
sending this location request to a location centre (40);
receiving from the location centre, an information indicative of the mobile station location, said location being determined by selecting at least one of the positioning methods indicated in the location request.

6. A method as claimed in claim 4, wherein said information element further includes data specific to the mobile station for use in the indicated positioning methods.

7. A method as claimed in claim 5 or 6, wherein said indicated positioning methods include the use of at least one of the following parameters:
Timing Advance, Mobile Assisted Enhanced Observed Time Difference (E-OTD), Mobile Based Enhanced Observed Time Difference (E-OTD), Global Positioning System (OPS), Uplink Time Difference of Arrival (U-TDOA).

8. A method as claimed in any one of claims 5 to 7, wherein said access network is an unlicensed radio access network including a plurality of access points (51) adapted to support an unlicensed radio connection with said mobile station (10') and a broadband packet-switched network (52) connecting said access controller (53) to said access points and wherein said indicated positioning methods include the use of at least one of the following parameters: Cell Global Identifier CGI, Public IP address on said broadband packet-switched network, Private IP address on said broadband packet-switched network, Access point identifier AP-ID, WLAN SSID, Bluetooth PAN service name.

## Patentansprüche

1. Verfahren zum Bestimmen der Position einer Mobilstation innerhalb eines Mobiltelekommunikationsnetzes, folgende Schritte umfassend:
Empfangen einer Positionsanforderung von einer Zugangssteuerung an einem Location Center, wobei die Zugangssteuerung Teil eines Zugangsnetzes bildet, das eine Verbindung zwischen der Mobilstation und einem Kernnetzteil des Mobiltelekommunikationsnetzes bildet, wobei die Positionsanforderung ein Informationselement einschließt, das für mindestens ein Positionierungsverfahren bezeichnend ist, das von der Zugangssteuerung in der Verbindung mit der Mobilstation unterstützt wird,
Auswählen von mindestens einem der Positionierungsverfahren, das in der Positionsanforderung angezeigt ist, und Nutzen des ausgewählten Positionierungsverfahrens, um die Position der Mobilstation zu bestimmen und die Information, die für die Position der Mobilstation bezeichnend ist, an die Zugangssteuerung zurückzuleiten.

2. Verfahren nach Anspruch 1, worin der Schritt des Empfangens einer Positionsanforderung das Empfangen von Daten einschließt, die für die Mobilstation zur Verwendung in mindestens einem der angezeigten Positionierungsverfahren spezifisch sind, und der Schritt des Nutzens von einem der Positionierungsverfahren das Nutzen der Daten im Positionierungsverfahren einschließt.

3. Verfahren nach Anspruch 1, worin der Schritt des Nutzens von einem der Positionierungsverfahren einschließt, von einer Zugangssteuerung Daten anzufordern, die für die Mobilstation zur Verwendung im ausgewählten Positionierungsverfahren spezifisch sind.

4. Verfahren nach einem vorhergehenden Anspruch, worin die Positionierungsverfahren das Verwenden von mindestens einem der folgenden Parameter einschließen:
Timing Advance (Zeitversatz), mobilunterstützte Enhanced Observed Time Difference (verbesserte beobachtete Zeitdifferenz) (E-OTD), mobilbasierte Enhanced Observed Time Difference (E-OTD), Global Positioning System (GPS), Uplink Time Difference of Arrival (Uplink-Ankunftszeitdifferenz) (U-TDOA), Cell Global Identifier (globaler Zellenidentifikator) CGI, öffentliche IP-Adresse, private IP-Adresse, Zugangspunkt-Identifikator AP-ID, WLAN SSID, Bluetooth PAN-Dienstname.

5. Verfahren zum Anfordern der Position einer Mobilstation von einer Zugangssteuerung (32; 53), die einen Teil eines Zugangsnetzes (30; 50) bildet, das eine Verbindung zwischen einer Mobilstation (10; 10') und einem Kernnetzteil (20) eines Telekommunikationsnetzes bereitstellt, wobei das Verfahren folgende Schritte einschließt:
Erzeugen einer Positionsanforderung, ein Informationselement einschließend, das mindestens ein Positionierungsverfahren anzeigt, das von der Zugangssteuerung (32; 53) in der Verbindung mit der Mobilstation (10; 10') unterstützt wird;
Senden dieser Positionsanforderung an ein Location Center (40);
Empfangen einer Information vom Location Center, die für die Position der Mobilstation bezeichnend ist, wobei die Position durch Auswählen von mindestens einem der Positionierungsverfahren bestimmt wird, das in der Positionsanforderung angezeigt ist.

6. Verfahren nach Anspruch 4, worin das Informationselement außerdem Daten einschließt, die für die Mobilstation zur Verwendung in den angezeigten Positionierungsverfahren spezifisch sind.

7. Verfahren nach Anspruch 5 oder 6, worin die angezeigten Positionierungsverfahren die Verwendung von mindestens einem der folgenden Parameter einschließen:
Timing Advance (Zeitversatz), mobilunterstützte Enhanced Observed Time Difference (verbesserte beobachtete Zeitdifferenz) (E-OTD), mobilbasierte Enhanced Observed Time Difference (E-OTD), Global Positioning System (GPS), Uplink Time Difference of Arrival (Uplink-Ankunftszeitdifferenz) (U-TDOA).

8. Verfahren nach einem der Ansprüche 5 bis 7, worin das Zugangsnetz ein unlizenziertes Funkzugangsnetz ist, eine Vielzahl von Zugangspunkten (51) einschließend, die dazu angepasst sind, eine unlizenzierte Funkverbindung mit der Mobilstation (10') und einem paketvermitteltes Breitbandnetz (52) zu unterstützen, das die Zugangssteuerung (53) an die Zugangspunkte anschließt, und worin die angezeigten Positionierungsverfahren das Verwenden von mindestens einem der folgenden Parameter einschließt: Cell Global Identifier (globaler Zellenidentifikator) CGI, öffentliche IP-Adresse auf dem paketvermittelten Breitbandnetz, private IP-Adresse auf dem paketvermittelten Breitbandnetz, Zugangspunkt-Identifikator AP-ID, WLAN SSID, Bluetooth PAN-Dienstname.

## Revendications

1. Procédé de détermination de la position d'une station mobile dans un réseau de télécommunication mobile comprenant les étapes consistant à :
recevoir, au niveau d'un centre de localisation, une demande de localisation d'un contrôleur d'accès, ledit contrôleur d'accès faisant partie d'un réseau d'accès réalisant une connexion entre ladite station mobile et une partie de réseau de noyau dudit réseau de télécommunication mobile, ladite demande de localisation comprenant un élément d'information indiquant au moins un procédé de positionnement pris en charge par ledit contrôleur d'accès dans la connexion à ladite station mobile,
sélectionner au moins l'un des procédés de positionnement indiqués dans ladite demande de localisation et utiliser ledit procédé de positionnement sélectionné pour déterminer la position de la station mobile et renvoyer des informations indiquant la position de la station mobile audit contrôleur d'accès.

2. Procédé selon la revendication 1, dans lequel ladite étape de réception d'une demande de localisation comprend la réception de données spécifiques à la station mobile pour une utilisation dans au moins l'un desdits procédés de positionnement indiqués, et ladite étape d'utilisation de l'un des procédés de positionnement comprend l'utilisation des données dans ledit procédé de positionnement.

3. Procédé selon la revendication 1, dans lequel ladite étape d'utilisation de l'un des procédés de positionnement comprend la demande, à un contrôleur d'accès, de données spécifiques à la station mobile pour une utilisation dans ledit procédé de positionnement sélectionné.

4. Procédé selon l'une quelconque des revendications précédentes, dans lequel lesdits procédés de positionnement comprennent l'utilisation d'au moins l'un des paramètres suivants : avance de synchronisation, différence de temps observée améliorée (E-OTD) assistée par mobile, différence de temps observée améliorée (E-OTD) à base de mobile, système de positionnement mondial (GPS), différence de temps d'arrivée de liaison montante (U-TDOA), identifiant global de cellule (CGI), adresse IP publique, adresse IP privée, identifiant de point d'accès (AP-ID), SSID de WLAN, nom de service PAN Bluetooth.

5. Procédé de demande de localisation d'une station mobile d'un contrôleur d'accès (32 ; 53) faisant partie d'un réseau d'accès (30 ; 50) réalisant une connexion entre une station mobile (10 ; 10') et une partie de réseau de noyau (20) d'un réseau de télécommunication, ledit procédé comprenant les étapes consistant à :
générer une demande de localisation comprenant un élément d'information indiquant au moins un procédé de positionnement pris en charge par le contrôleur d'accès (32 ; 53) dans la connexion à la station mobile (10 ; 10') ;
envoyer cette demande de localisation à un centre de localisation (40) ;
recevoir des informations indiquant la position de la station mobile, ladite position étant déterminée en sélectionnant au moins l'un des procédés de positionnement indiqués dans la demande de localisation du centre de localisation.

6. Procédé selon la revendication 4, dans lequel ledit élément d'information comprend en outre des données spécifiques à la station mobile pour une utilisation dans les procédés de positionnement indiqués.

7. Procédé selon la revendication 5 ou 6, dans lequel lesdits procédés de positionnement indiqués comprennent l'utilisation d'au moins l'un des paramètres suivants : avance de synchronisation, différence de temps observée améliorée (E-OTD) assistée par mobile, différence de temps observée améliorée (E-OTD) à base de mobile, système de positionnement mondial (GPS), différence de temps d'arrivée de liaison montante (U-TDOA).

8. Procédé selon l'une quelconque des revendications 5 à 7, dans lequel ledit réseau d'accès est un réseau d'accès radio sans licence comprenant une pluralité de points d'accès (51) adaptés pour prendre en charge une connexion radio sans licence à ladite station mobile (10') et un réseau à commutation de paquets large bande (52) connectant ledit contrôleur d'accès (53) auxdits points d'accès, et dans lequel lesdits procédés de positionnement indiqués comprennent l'utilisation d'au moins l'un des paramètres suivants : identifiant global de cellule (CGI), adresse IP publique sur ledit réseau à commutation de paquets large bande, adresse IP privée sur ledit réseau à commutation de paquets large bande, identifiant de point d'accès (AP-ID), SSID de WLAN, nom de service PAN Bluetooth.
